# EUROPEAN PATENT APPLICATION

(11) **EP 3 005 883 A1**
(43) Date of publication of application: **13.04.2016**
(21) Application number: 14803962.1
(22) Date of filing: 28.05.2014
(51) Int. Cl.: A23L 19/00, C12G 3/04

(54) **METHOD FOR FORCE-RIPENING ROSACEOUS FRUIT**

(30) Priority: 28.05.2013 JP 2013112020
(71) Applicant: Suntory Holdings Limited, Osaka-shi, Osaka 530-8203 (JP)
(72) Inventor: SASANUMA, Yumi, Kyoto 619-0284 (JP)
(74) Representative: Vossius & Partner Patentanwälte Rechtsanwälte mbB
(86) International application number: PCT/JP2014/064167
(87) International publication number: WO 2014/192826

(57) **Abstract**

A method for maturing a rosaceous fruit after harvest, characterized by maturing a rosaceous fruit in an oxygen-loaded atmosphere; a method for storing a rosaceous fruit, a method for increasing ester production, or a method for increasing lactone production, a method for producing a fruit matured after harvest, having the same characteristics as the above characteristics; and a fruit matured after harvest obtained by these methods; a processed product using the fruit; a method for producing a fruit liqueur using the fruit; and a fruit liqueur obtained by the method. According to the present invention, it is possible to obtain a fruit that is matured after harvest which is more excellent in aroma. In addition, a fruity fruit liqueur can be provided by using the fruits that are matured after harvest.

## Description

### TECHNICAL FIELD

The present invention relates to a method for maturing a rosaceous fruit after harvest. More specifically, the present invention relates to a method for maturing a rosaceous fruit after harvest, a method for storage, a method for increasing ester production, and a method for increasing lactone production of a rosaceous fruit, and a method for producing a fruit matured after harvest, and a fruit matured after harvest obtained by these methods, a processed product using the fruit, a method for producing a fruit liqueur using the fruit, and a fruit liqueur obtained by the method.

### BACKGROUND ART

In general, in order to produce *ume* liqueur (a Japanese apricot (*Prunus mume*) liqueur), a premature Japanese apricot fruit (green *ume*) called relatively mature green *ume* is immersed together with sugar in a white liquor to ooze out ingredients of the Japanese apricot to the white liquor, and the white liquor is then matured for a period of from a half year to one year or so. During the maturation, it has been known that *ume* liqueur with even more excellent aroma is obtained by using a Japanese apricot fully matured or matured after harvest.

For example, in order to obtain a fruity *ume* liqueur, a method for producing a *ume* liqueur with Japanese apricots matured after harvest has been proposed (see, Patent Publication 1). Patent Publication 2 discloses that Japanese apricots fully matured or matured after harvest are frozen and immersed, whereby a *ume* liqueur that contains fully matured, aroma ingredients at a high level can be produced. Also, Non-Patent Publication 1 has reported the influences on the aroma ingredients and the bitterness ingredients in *ume* liqueur due to the differences in the conditions for maturation of Japanese apricot fruit after harvest. Non-Patent Publication 2 has reported that the content of the aroma ingredients in *ume* liqueur is found to be correlated with the fruit skin color of the Japanese apricot fruit and hardness of the fruit, and a raw material Japanese apricot fruit can be selected by using the fruit skin color and hardness of the fruit as indexes for maturity. Non-Patent Publication 3 discloses the searched results on the relationship between the harvest timing and the period of maturation after harvest of the Japanese apricot fruits in that it is better to quickly process fruits with an advanced maturity after harvest, and it is better to mature fruits of which maturity is not much advanced after harvest before processing.

In addition, Non-Patent Publication 4 has shown that esters and lactones are important aroma ingredients in apricot (*Prunus armeniaca*) fruit or Japanese plum (*Prunus salicina*) fruit, which is a rosaceous fruit. Non-Patent Publication 5 also similarly has shown in peach fruit, which is a rosaceous fruit that esters and lactones, especially lactones in the case of peach fruit, are important aroma ingredients.

### RELATED ART REFERENCES

### PATENT PUBLICATIONS

Patent Publication 1: Japanese Patent Laid-Open No. 2004-57036
Patent Publication 2: Japanese Patent Laid-Open No. 2011-115118

### NON-PATENT PUBLICATIONS

Non-Patent Publication 1: Hort. Res. (Japan) 11(2) 273-279, 2012, Effect of the Ripening Condition for Japanese Apricot (*Prunus mume*) 'Nanko' Fruit on the Aroma and Bitter Components of Its Processed Liqueur
Non-Patent Publication 2: Hort. Res. (Japan) 11(4) 515-521, 2012, The Maturity Index of Fruit for High Aroma Components of Processed Liqueur of `Nanko' Japanese Apricot (Prunus mume Sieb. et Zucc.)
Non-Patent Publication 3: Hort. Res. (Japan) 7(2) 299-303, 2008, Effect of the Ripening Period of Fruit Harvested at Different Degrees of Maturity on the Quality of Fruit and Processed Ume Liqueur Made from 'Nanko' Japanese Apricot (Prunus mume)
Non-Patent Publication 4: Plant Bleed. 111(3), 236 (1993): Transmission of Biochemical Flavor Constitutes from Apricot and Plum to their Interspecific Hybrid
Non-Patent Publication 5: J. Agric. Food Chem., 58(10), 2010: Expression of Genes Associated with Aroma Formation Derived from the Fatty Acid Pathway during Peach Fruit Ripening

### SUMMARY OF THE INVENTION

### PROBLEMS TO BE SOLVED BY THE INVENTION

According to the related art techniques, it is possible to mature a rosaceous fruit after harvest. However, as described in Non-Patent Publication 1, as the conditions therefor, for example, the temperature for maturation after harvest and the period for maturation after harvest are merely studied, so that how other conditions would affect the degree of maturation are yet unknown.

An object of the present invention is to provide a method for maturing a rosaceous fruit after harvest to obtain a fruit matured after harvest with more excellent quality, a method for storage, a method for increasing ester production, a method for increasing lactone production of a fruit matured after harvest, or a method for producing a fruit matured after harvest, and a fruit matured after harvest obtained by these methods, a processed product using the fruit, a method for producing a fruit liqueur using the fruit, and a fruit liqueur obtained by the method.

### MEANS TO SOLVE THE PROBLEMS

Therefore, as a result of intensive studies in order to solve the problems, the present inventors have found that a fruit matured after harvest containing a larger amount of aroma ingredients is obtained by storing a rosaceous fruit immediately after harvest under an oxygen-loaded environment. The present invention has been perfected thereby.

Specifically, the present invention relates to the following [1] to [36]:
[1] A method for maturing a rosaceous fruit after harvest, including maturing a rosaceous fruit in an oxygen-loaded atmosphere.
[2] The method according to the above [1], wherein the environment is an oxygen concentration of from 40 to 80% by volume.
[3] The method according to the above [1] or [2], wherein the rosaceous fruit is selected from the group consisting of Japanese apricot (*Prunus mume*) fruit, apple fruit, Japanese plum (*Prunus salicina*) fruit, apricot (*Prunus armeniaca*) fruit, and strawberry fruit.
[4] A method for storing a rosaceous fruit, including storing a rosaceous fruit in an oxygen-loaded atmosphere.
[5] The method according to the above [4], wherein the environment is an oxygen concentration of from 40 to 80% by volume.
[6] The method according to the above [4] or [5], wherein the rosaceous fruit is selected from the group consisting of Japanese apricot (*Prunus mume*) fruit, apple fruit, Japanese plum (*Prunus salicina*) fruit, apricot (*Prunus armeniaca*) fruit, and strawberry fruit.
[7] A method for increasing ester production of a rosaceous fruit, including storing a rosaceous fruit in an oxygen-loaded atmosphere to produce an ester.
[8] The method according to the above [7], wherein the environment is an oxygen concentration of from 40 to 80% by volume.
[9] The method according to the above [7] or [8], wherein the rosaceous fruit is selected from the group consisting of Japanese apricot (*Prunus mume*) fruit, apple fruit, Japanese plum (*Prunus salicina*) fruit, apricot (*Prunus armeniaca*) fruit, and strawberry fruit.
[10] A method for increasing lactone production of a rosaceous fruit, including storing a rosaceous fruit in an oxygen-loaded atmosphere to produce a lactone.
[11] The method according to the above [10], wherein the environment is an oxygen concentration of from 40 to 80% by volume.
[12] The method according to the above [10] or [11], wherein the rosaceous fruit is selected from the group consisting of Japanese apricot (*Prunus mume*) fruit, apple fruit, Japanese plum (*Prunus salicina*) fruit, apricot (*Prunus armeniaca*) fruit, and strawberry fruit.
[13] A method for producing a fruit matured after harvest, including storing a rosaceous fruit in an oxygen-loaded atmosphere to give a fruit matured after harvest.
[14] The method according to the above [13], wherein the environment is an oxygen concentration of from 40 to 80% by volume.
[15] The method according to the above [13] or [14], wherein the rosaceous fruit is selected from the group consisting of Japanese apricot (*Prunus mume*) fruit, apple fruit, Japanese plum (*Prunus salicina*) fruit, apricot (*Prunus armeniaca*) fruit, and strawberry fruit.
[16] A fruit matured after harvest of a rosaceous fruit obtained by a method as defined in any one of the above [13] to [15].
[17] A processed product of a rosaceous fruit, obtained by using a fruit matured after harvest as defined in the above [16] as a raw material.
[18] The processed product according to the above [17], wherein the processed product is a Japanese apricot (*Prunus mume)* liqueur (*ume* liqueur).
[19] A method for producing a fruit liqueur, using a rosaceous fruit matured in an oxygen-loaded atmosphere as a raw material.
[20] The method according to the above [19], wherein the environment is an oxygen concentration of from 40 to 80% by volume.
[21] The method according to the above [19] or [20], wherein the rosaceous fruit is selected from the group consisting of Japanese apricot (*Prunus mume*) fruit, apple fruit, Japanese plum (*Prunus salicina*) fruit, apricot (*Prunus armeniaca*) fruit, and strawberry fruit.
[22] A fruit liqueur of a rosaceous fruit obtained by a method as defined in any one of the above [19] to [21].
[23] The fruit liqueur according to the above [22], wherein the fruit liqueur is *ume* liqueur (a Japanese apricot (*Prunus mume)* liqueur).
[24] A method for maturing a Japanese apricot (*Prunus mume*) fruit after harvest, including maturing a Japanese apricot (*Prunus mume)* fruit in an oxygen-loaded atmosphere.
[25] The method according to the above [24], wherein the environment is an oxygen concentration of from 40 to 80% by volume.
[26] A method for storing a Japanese apricot (*Prunus mume*) fruit, including storing a Japanese apricot (*Prunus mume*) fruit in an oxygen-loaded atmosphere.
[27] The method according to the above [26], wherein the environment is an oxygen concentration of from 40 to 80% by volume.
[28] A method for increasing ester production of a Japanese apricot (*Prunus mume*) fruit, including storing a Japanese apricot (*Prunus mume*) fruit in an oxygen-loaded atmosphere, to produce an ester.
[29] The method according to the above [28], wherein the environment is an oxygen concentration of from 40 to 80% by volume.
[30] A method for increasing lactone production of a Japanese apricot (*Prunus mume*) fruit, including storing a Japanese apricot (*Prunus mume*) fruit in an oxygen-loaded atmosphere, to produce a lactone.
[31] The method according to the above [30], wherein the environment is an oxygen concentration of from 40 to 80% by volume.
[32] A method for producing a Japanese apricot (*Prunus mume*) matured after harvest, including storing a Japanese apricot (*Prunus mume*) fruit in an oxygen-loaded atmosphere, to give a Japanese apricot matured after harvest.
[33] The method according to the above [32], wherein the environment is an oxygen concentration of from 40 to 80% by volume.
[34] A method for producing a Japanese apricot (*Prunus mume*) liqueur *(ume* liqueur), using a Japanese apricot (*Prunus mume*) fruit that is matured in an oxygen-loaded atmosphere as a raw material for *ume* liqueur.
[35] The method according to the above [34], wherein the environment is an oxygen concentration of from 40 to 80% by volume.
[36] A Japanese apricot (*Prunus mume*) liqueur (*ume* liqueur) obtained by a method as defined in the above [34] or [35].

### EFFECTS OF THE INVENTION

According to the method for maturation after harvest of the present invention, it is possible to obtain a fruit matured after harvest containing a larger amount of aroma ingredients. In addition, by using a fruit matured after harvest according to the above method, an even more fruity fruit liqueur can be produced.

### BRIEF DESCRIPTION OF THE DRAWINGS

[FIG. 1] FIG. 1 is a graph showing the ester contents of the Japanese apricot (*Prunus mume*) fruit matured after harvest.
[FIG. 2] FIG. 2 is a graph showing the lactone contents of the Japanese apricot (*Prunus mume*) fruit matured after harvest.
[FIG. 3] FIG. 3 is a figure showing one example of a chart performing gas chromatography on the collected solution by steam distillation of the Japanese apricot (*Prunus mume*) fruit matured after harvest.
[FIG. 4] FIG. 4 is a graph showing the ester contents of the apple fruit matured after harvest.

### MODES FOR CARRYING OUT THE INVENTION

The method for maturing a rosaceous fruit after harvest of the present invention has the feature of maturing a rosaceous fruit in an oxygen-loaded atmosphere. In a rosaceous fruit, esters and lactones are important aroma ingredients, and these esters and lactones are synthesized by production mechanisms that are common in plants. For example, esters have been known to be produced by binding precursor alcohols and organic acids with ester-binding enzyme AAT (alcohol acyltransferase) using ATP energy. In addition, the lactones are considered to be produced by degradation, oxidation, reduction, or cyclization of the fatty acids. In these syntheses, although the detailed mechanisms therefor are unclear, an aerobic metabolic pathway in the rosaceous fruit, for example, TCA metabolic pathway of glucose, fatty acid degradation pathway of cell membrane (β oxidation, LOX/HPL pathway) or the like is promoted by loading oxygen to a rosaceous fruit, which in turn promotes the production of precursor alcohols and organic acids for esters, or production of lactones. In addition, since the metabolism overall is activated, a possibility of increasing ester binding activity may also be considered. As a result, in the rosaceous plants having similar metabolic pathways, it is assumed that synthesis of esters such as hexyl acetate or lactones is promoted, so that a matured fruit after harvest even more rich in aroma is obtained. However, these assumptions are not intended to limit the present invention. Here, the term "oxygen-loaded atmosphere" as used herein is, for example, an atmosphere in which the oxygen concentration is increased more than that of the air, because the oxygen concentration in the air is about 21 % by volume or so. In addition, the phrase 'in the air' as used herein means in the atmosphere of which oxygen concentration is 21 % by volume.

The rosaceous plant (*Rosaceae*) in the present invention is one of the genera of plants belonging to the family of Rosales, which includes many of those of which fruits are edible. As the rosaceous fruit, specifically, drupes such as Japanese apricots (*Prunus mume*)*,* Japanese plums (*Prunus salicina*)*,* apricots (*Prunus armeniaca*)*,* prunes (*Prunus domestica*)*,* peaches, nectarines, and cherries; pome fruits such as apples, Nashi pear (*Pyrus pyrifolia var. culta*), European pear (*Pyrus communes*)*, Pseudocydonia sinensis,* and quince (*Cydonia oblonga*); and fruits such as strawberries, raspberries, blackberries, and loquats (*Eriobotrya japonica*) can be used. Although the sites at which these fruits contain esters or lactones may vary, including fruit flesh, fruit skin, seed, or the like, the sites used in the present invention are not particularly limited, and the fruit entirety or specified sites may be selected and used. In addition, the varieties are not particularly limited.

For example, although the Japanese apricots (*Primus mume*) usable in the present invention are not particularly limited, varieties that are usable in the production of *ume* liqueur can be suitably used, including, for example, Nanko, Kojiro, Oushuku, Benisashi, Kensaki, Shirakaga, and the like. In addition, the *Prunus mume* may be those produced outside Japan. The Japanese apricot fruit as used herein means the entirety including fruit skin, fruit flesh, and seeds.

In addition, since the fruit is matured after harvest, the state of the fruit before maturation after harvest includes those that can be matured. For example, in the case of the Japanese apricots, the state may be a green *ume* state (premature state) or a maturity that is slightly progressed from green *ume.* In addition, the fruit may be the fruit that is matured on trees until just before a point where aroma is liberated, or the fruit that is matured on trees until aroma is liberated, and the fruit may further be a dropped fruit.

The hardness of the fruit used may differ depending upon the kinds of fruits. For example, in the case of the Japanese apricots, it is preferable that the hardness is preferably 1.5 kg or more, more preferably 1.8 kg or more, and even more preferably 2 kg or more, and preferably 6 kg or less, more preferably 4 kg or less, and even more preferably 3.6 kg or less. Here, the hardness of fruit as used herein can be measured in accordance with a method described in Examples set forth below.

The atmosphere for maturing a fruit after harvest is not particularly limited, so long as the atmosphere is a gas of which oxygen concentration is increased more than that in the air. The oxygen concentration is preferably 25% by volume or more, more preferably 30% by volume or more, and even more preferably 40% by volume or more, and preferably 100% volume or less, more preferably 90% by volume or less, and even more preferably 80% by volume or less, from the viewpoint of obtaining a fruit matured after harvest containing a larger amount of the aroma ingredient. In addition, the oxygen concentration is preferably from 25 to 100% by volume, more preferably from 30 to 90% by volume, and even more preferably from 40 to 80% by volume. Here, the gas other than the oxygen existing in the atmosphere is not particularly limited, and includes nitrogen, carbon dioxide, and the like. The concentrations of these components are not particularly limited, and an example of the concentration is, for example, a nitrogen concentration of 20% by volume when the oxygen concentration is 80% by volume.

The temperature for maturation after harvest is preferably from 16° to 30°C, more preferably from 17° to 27°C, and even more preferably from 20° to 25°C, from the viewpoint of the effect of producing aroma. When the temperature for maturation after harvest is 16°C or higher, it is preferable because the production of the aroma ingredient is large. On the other hand, when the temperature for maturation after harvest is 30°C or lower, it is preferable because the production of high-quality aroma ingredient is enhanced. In addition, the humidity for maturation after harvest is preferably a humidified state, from the viewpoint of storage of the fruit, or it may also be in a dry state.

The method for maturation after harvest is not particularly limited so long as fruit can be allowed to stand in the above atmosphere. For example, fruit may be allowed to stand in a desiccator having the above atmosphere, or fruit may be allowed to stand in a room having the above atmosphere. The fruit may be allowed to stand in that state of fruit by itself, or allowed to stand after placing fruit in a container or bag having sufficient gas permeability.

The period for maturation after harvest would be shorter if the oxygen concentration is higher. For example, in the case of the Japanese apricots, in a case where an oxygen concentration is above 80% by volume and 100% by volume or less, the period for maturation after harvest is preferably one day or longer, and more preferably two days or longer, and preferably 13 days or shorter, and more preferably 5 days or shorter. In addition, the period for maturation after harvest is preferably from 1 to 13 days, and more preferably from 2 to 5 days. In addition, in a case where an oxygen concentration is 40% by volume or more and 80% by volume or less, the period for maturation after harvest is preferably one day or longer, more preferably two days or longer, and even more preferably three days or longer, and preferably 15 days or shorter, more preferably 7 days or shorter, and even more preferably 5 days or shorter. In addition, the period for maturation after harvest is preferably from 1 to 15 days, more preferably 2 to 7 days, and even more preferably from 3 to 5 days. In a case where an oxygen concentration is 25% by volume or more and less than 40% by volume, the period for maturation after harvest is preferably one day or longer, and more preferably two days or longer, and preferably 17 days or shorter, and more preferably 9 days or shorter. In addition, the period for maturation after harvest is preferably from 1 to 17 days, and more preferably 2 to 9 days. Here, the period for maturation after harvest as used herein refers to a period during maturation after harvest, which has the same meaning as the keeping period or storage period.

Thus, a fruit is matured after harvest, and the resulting fruit would have increased contents of esters. The esters of which contents would increase include esters formed between alcohols and organic acids. The alcohols include lower alcohols having from 1 to 6 carbon atoms, and specific examples include ethanol, butanol, hexanol, isobutanol, and pentanol. The organic acids include aliphatic organic acids, and examples include acetic acid, butyric acid, hexanoic acid, hexenoic acid, and isobutanoic acid. The esters formed between the alcohols and the organic acids are preferably ethyl butyrate, hexyl acetate, butyl acetate, ethyl hexanoate, ethyl 2-methylbutyrate, and ethyl 3-methylbutyrate, from the viewpoint of fruity aroma.

Ethyl butyrate has a sweet and fruity aroma, shows a soft and matured apple-like aroma, and has improved texture. Although the content of ethyl butyrate in the matured fruit after harvest differs depending upon the kinds of fruits, the maturity of the fruits to be stored, the location of the fruit plantations, and the harvested years, when the fruit species is Japanese apricot and final stage fruit of the green *ume* harvested at the same time and the same plantation is stored at 20°C, the content is increased in the air to 0.1 mg/kg or so after three days, and 0.4 mg/kg or so after five days, whereas in the atmosphere having an oxygen concentration of from 60 to 80% by volume, the content is increased to from 0.2 to 0.3 mg/kg or so after three days, and to 0.6 mg/kg or so after five days. In the atmosphere having an oxygen concentration of from 60 to 80% by volume, ethyl butyrate is always contained in a larger amount than that in the air when compared at the same number of storage days. Here, ethyl butyrate is not detected from green *ume,* and the content of ethyl butyrate of a commercially available fully matured *ume* is 0.02 mg/kg or so. The contents of esters of the fruits as used herein can be measured in accordance with the method described in Examples set forth below.

Hexyl acetate has a sweet and fruity aroma, and shows splendid and light European pear-like aroma. Although the content of hexyl acetate in the fruit matured after harvest differs depending upon the kinds of fruits, the maturity of the fruits to be stored, the location of the fruit plantations, and the harvested years, when the fruit species is Japanese apricot and later stage fruit of the green *ume* harvested at the same time and the same plantation is stored at 20°C, the content is increased in the air to 2.5 mg/kg or so after four to five days, and to 3.0 mg/kg after six days, whereas in the atmosphere having an oxygen concentration of from 60 to 80% by volume, the content is increased to from 3.1 to 3.5 mg/kg or so after four to six days, and decreased thereafter. Here, hexyl acetate is not detected from green *ume,* and the content of hexyl acetate of a commercially available fully matured *ume* is 1.5 mg/kg or so.

Butyl acetate has a sweet and fruity aroma, and shows an estery, matured apple-like aroma. Although the content of butyl acetate in the matured fruit after harvest differs depending upon the kinds of fruits, the maturity of the fruits to be stored, the location of the fruit plantations, and the harvested years, when the fruit species is Japanese apricot and later stage fruit of the green *ume* harvested at the same time and the same plantation is stored at 20°C, the content is increased in the air to from 9.5 to 12.7 mg/kg or so after four to five days, and to 13.8 mg/kg after six days, and decreased thereafter, whereas in the atmosphere having an oxygen concentration of from 60 to 80% by volume, the content is increased to from 15.2 to 16.5 mg/kg or so after four to five days, and decreased thereafter. Here, butyl acetate is not detected from green *ume,* and the content of butyl acetate of a commercially available fully matured *ume* is 4 mg/kg or so.

Ethyl hexanoate has a splendid, fresh and greeny fruity aroma, and shows a sweet, light pineapple-like aroma. Although the content of ethyl hexanoate in the matured fruit after harvest differs depending upon the kinds of fruits, the maturity of the fruits to be stored, the location of the fruit plantations, and the harvested years, when the fruit species is Japanese apricot and final stage fruit of the green *ume* harvested at the same time and the same plantation is stored at 20°C, the content is increased in the air to from 0.5 to 0.7 mg/kg or so after three to five days, whereas in the atmosphere having an oxygen concentration of from 60 to 80% by volume, the content is increased to from 0.9 to 1.2 mg/kg or so after three to five days. In the atmosphere having an oxygen concentration of from 60 to 80% by volume, ethyl hexanoate is always contained in a larger amount than that in the air when compared at the same number of storage days. Here, ethyl hexanoate is not detected from green *ume,* and the content of ethyl hexanoate of a commercially available fully matured *ume* is 0.3 mg/kg or so.

In addition, the fruit obtained by the method of the present invention would also contain increased contents of lactones. The lactones of which contents are increased include γ-decalactone, δ-decalactone, γ-dodecalactone, γ-hexalactone, and γ-octalactone. Among them, γ-decalactone, δ-decalactone, and γ-dodecalactone are preferred, from the viewpoint of giving fruity aroma.

γ-Decalactone shows a white peach-like, soft, sweet and fruity aroma. Although the content of γ-decalactone in the matured fruit after harvest differs depending upon the kinds of fruits, the maturity of the fruits to be stored, the location of the fruit plantations, and the harvested years, when the fruit species is Japanese apricot and final stage fruit of the green *ume* harvested at the same time and the same plantation is stored at 20°C, the content is increased in the air to from 1.6 to 2.0 mg/kg or so after three to four days, and to 2.26 mg/kg after six days, and not increased any more, whereas in the atmosphere having an oxygen concentration of from 60 to 80% by volume, the content is increased to from 2.1 to 2.4 mg/kg or so after three to four days. In the atmosphere having an oxygen concentration of from 60 to 80% by volume, γ-decalactone is always contained in a larger amount than that in the air when compared at the same number of storage days. Here, γ-decalactone is not detected from green *ume* until a later stage, and the content at a final stage of green *ume* is 0.007 mg/kg or so. The content of γ-decalactone of a commercially available fully matured *ume* is 0.89 mg/kg or so. The content of lactones of the fruits as used herein can be measured in accordance with the method described in Examples set forth below.

δ-Decalactone shows a yellowish peach-like hard texture, sweet and fruity aroma. Although the content of δ-decalactone in the matured fruit after harvest differs depending upon the kinds of fruits, the maturity of the fruits to be stored, the location of the fruit plantations, and the harvested years, when the fruit species is Japanese apricot and final stage fruit of the green *ume* harvested at the same time and the same plantation is stored at 20°C, the content is increased in the air to from 0.22 to 0.27 mg/kg or so after three to four days, and decreased thereafter, whereas in the atmosphere having an oxygen concentration of from 60 to 80% by volume, the content is increased to from 0.34 to 0.37 mg/kg or so after three to four days, and decreased thereafter. Here, δ-decalactone is not detected from green *ume,* and the content of δ-decalactone of a commercially available fully matured *ume* is 0.31 mg/kg or so.

γ-Dodecalactone shows a peach-like light, sweet and fruity aroma. Although the content of γ-dodecalactone in the matured fruit after harvest differs depending upon the kinds of fruits, the maturity of the fruits to be stored, the location of the fruit plantations, and the harvested years, when the fruit species is Japanese apricot and final stage fruit of the green *ume* harvested at the same time and the same plantation is stored at 20°C, the content is increased in the air to from 0.42 to 0.50 mg/kg or so after three to four days, and to 0.65 mg/kg or so after six days, and decreased thereafter, whereas in the atmosphere having an oxygen concentration of from 60 to 80% by volume, the content is increased to from 0.78 to 0.81 mg/kg or so after three to four days, and to 0.88 mg/kg or so after six days, and decreased thereafter. Here, γ-dodecalactone is not detected from green *ume* until a later stage, the content at a final stage of green *ume* is 0.007 mg/kg or so. The content of γ-dodecalactone of a commercially available fully matured *ume* is 0.19 mg/kg or so.

Thus, a fruit is stored under an oxygen-loaded atmosphere, whereby a fruit matured after harvest that richly contains the above esters and lactones than those of fruits that matured on the trees or the fruits stored in the air is obtained. The resulting fruit matured after harvest can be immediately used as it is, and may be stored in accordance with a known method. For example, by performing frozen storage, the fruit can be stored while keeping aroma ingredient.

The present invention also provides a method for storing a fruit, including storing a fruit under an oxygen-loaded atmosphere. The method features in storing a fruit under an oxygen-loaded atmosphere, and the atmosphere is the same as that in the above method for maturation after harvest. Also, the fruits used and other conditions are also the same as those in the above method.

Also, one embodiment of the present invention provides a method for increasing ester production of a fruit, including storing a fruit in an oxygen-loaded atmosphere to produce an ester; and a method for increasing lactone production of a Japanese apricot fruit, including storing a Japanese apricot fruit in an oxygen-loaded atmosphere to produce a lactone. These methods feature in storing a fruit under an oxygen-loaded atmosphere, and the atmosphere is the same as that in the above method for maturation after harvest. Also, the fruits used and other storage conditions are also the same as those in the above method.

Further, one embodiment of the present invention is to provide a method for producing a fruit matured after harvest, including storing a fruit in an oxygen-loaded atmosphere to give a fruit matured after harvest. The method features in storing a fruit under an oxygen-loaded atmosphere, and the atmosphere is the same as that in the above method for maturation after harvest. Also, the fruits used and other storage conditions are also the same as those in the above method.

Since the fruit matured after harvest richly contains esters and lactones, and has a rich fruity aroma, the fruit matured after harvest is suitably used in processed products making use of fruit aroma, such as jams, juices, extract liqueurs using fruits, such as fruit liqueurs and fruit spirits, flavors, and the like. Here, the amount blended in this case is not unconditionally determined, and adjusted properly according to the kinds of the processed products.

Another embodiment of the present invention includes a method for producing a fruit liqueur using a fruit matured under an oxygen-loaded atmosphere as a raw material. The method features in storing a fruit under an oxygen-loaded atmosphere, and the atmosphere is the same as that in the above method for maturation after harvest. Also, the fruits used and other conditions for maturation after harvest are also the same as those in the above method. Here, a fruit liqueur obtained by the method is also provided by the present invention.

The production of a fruit liqueur is not particularly limited, so long as the above fruit matured after harvest is used, and the method can be carried out in accordance with a known method. For example, the fruit liqueur can be produced by immersing a fruit matured after harvest mentioned above in a bottle for fruit liqueur together with a white liquor for fruit liqueur and rock candies for several months. Here, the fruit liqueur as used herein also includes fruit liqueur-like beverages (for example, fruit liqueur-like nonalcoholic beverages).

### EXAMPLES

The present invention will be specifically described hereinbelow by the Examples, without intending to limit the scope of the present invention to the following Examples.

### [Hardness of Japanese Apricot (Prunus mume) Fruit]

The hardness is measured with a fruit hardness tester (Model KM, manufactured by FUJIWARA SCIENTIFIC CO., LTD.) in accordance with (punctures) penetration method. Specifically, harvested fruits and sampled fruits during storage test are subjected to hardness measurements with the fruit hardness tester at 3 points of the positions 90 degrees, 180 degrees, and 270 degrees from the fruit seam line on the equatorial plane of the fruit. The hardness of the fruit is defined by a mean of the three points as hardness of the fruit.

### Test Example 1

The contents of esters and lactones were quantified when 2 kg of green *ume* (later stage, final stage) of "Nanko" harvested at Tanabe-shi, Wakayama was matured after harvest for a period shown in Tables 1 to 3 in a desiccator at an oxygen concentration (% by volume) as listed in Tables 1 to 3. Here, the oxygen concentration in the desiccator was regulated by humidifying a mixture prepared by mixing an oxygen gas and a nitrogen gas with a gas mixer while adjusting the mixed gas to a constant flow rate with a mass flow-meter, and aerating to the desiccator. While aerating, the desiccator was placed in a thermostat, and a storage test was carried out at a constant temperature (20°C). In addition, the humidity inside the desiccator was 99%. As the esters, ethyl butyrate, hexyl acetate, butyl acetate, and ethyl hexanoate were quantified, and a total content thereof was calculated. In addition, as the lactones, γ-decalactone, δ-decalactone, and γ-dodecalactone were quantified, and a total content thereof was calculated.

The preparation of analytical samples will be explained hereinbelow. The harvested fruits and the sampled fruits during storage test were roughly cut in pieces immediately after harvest or sampling, and frozen with liquid nitrogen, and further the fruit flesh portions of the frozen fruits (including fruit skin) were ground with a mortar in the liquid nitrogen, and the ground fruits were stored in a freezer held at -80°C until analysis. Aroma ingredients were extracted with a 50% ethanol solution while subjecting to constant temperature incubation shaking from the ground fruits previously quantified, and an entire amount of the extract was adjusted to an appropriate basicity with sodium bicarbonate. The extract was applied to Extrelut(registered trademark) NT column (R), and eluted with an organic solvent. The eluate was concentrated to give a concentrate as a sample for gas chromatograph analysis, and the gas chromatograph analysis was performed under the following conditions. The results are shown in Tables 1 to 3.

### < Gas Chromatograph Analysis >

Apparatus: GC/MS 6890N/5973N, manufactured by Agilent
Column: DB-WAX (manufactured by J&W), 60 m × 0.32 mm × 0.25 µm Amount of Injection: 1.0 µL
Method of Injection: Temperature at injected inlet: 240°C, splitless Heating Conditions: Keeping at 40°C for 10 minutes, thereafter heating to 220°C at a rate of 4°C/min, and keeping thereat for 10 minutes Ionization method: EI (Electron Ionization) method, ionization voltage: 70 eV

[Table 1]

**Table 1 (Esters: mg/kg)**

| Green *Ume* 2011 Later Stage (Hardness: About 3.5 kg) | Oxygen Concentration (% by volume) | | | |
|---|---|---|---|---|
| | 5 | 21 (in the air) | 60 | 80 |
| Stored for 5 Days | 20.2 | 21.8 | 28.0 | 29.2 |
| Stored for 3 Days | 4.3 | 14.1 | 14.9 | 19.7 |

[Table 2]

**Table 2 (Esters: mg/kg) Stored for 5 Days**

| | Before Storage | Oxygen Concentration (% by volume) | | |
|---|---|---|---|---|
| | | 5 | 21 (in the air) | 80 |
| Green *Ume* 2011 Later Stage (Hardness: About 3.5 kg) | 0.0 | 20.2 | 21.8 | 29.2 |
| Green *Ume* 2012 Later Stage (Hardness: About 3.2 kg) | 0.0 | 14.7 | 15.5 | 20.3 |
| Green *Ume* 2012 Final Stage (Hardness: About 2.5 to 3 kg) | 0.0 | 16.5 | 22.6 | 25.9 |

[Table 3]

**Table 3 (Lactones: mg/kg)**

| | Storage Period | Before Storage | Oxygen Concentration (% by volume) | | |
|---|---|---|---|---|---|
| | | | 5 | 21 (in the air) | 80 |
| Green *Ume* 2012 Later Stage (Hardness: About 3.2 kg) | 6 days | 0.00 | 1.4 | 1.3 | 2.2 |
| Green *Ume* 2012 Final Stage (Hardness: About 2.5 to 3 kg) | 3 days | 0.01 | 1.6 | 2.4 | 3.6 |

Although the numerical values would differ depending upon the maturity and the harvested years of the fruits to be stored, as shown in Tables 1 to 3, when fruits were harvested at the same timing in the same plantation, and the fruits having a certain level of fruit hardness were matured after harvest, the contents of the esters and lactones could be increased by increasing an oxygen concentration during storage in the same maturation period after harvest. The matters that the numerical values of the aroma ingredient of fruits would differ depending upon the maturity, the harvested years and plantations to be harvested of the fruits are described in a publication (Umeken, *Hort. Res. (Japan),* **11**(4) 515, 2012) or the like.

### Test Example 2

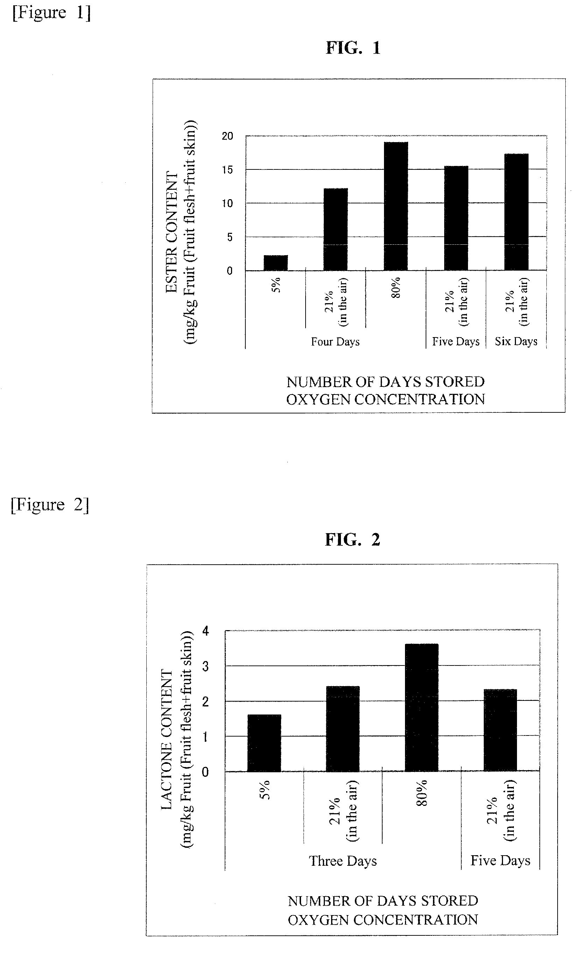

For 2 kg of the green *ume* used in Test Example 1, the contents of esters and lactones were quantified when the green *ume* was matured after harvest for a time period as listed in Table 4 or 5 in a desiccator with an oxygen concentration (% by volume) as listed in Table 4 or 5 that was regulated in the same manner as in Test Example 1. As the esters, each of the contents of ethyl butyrate, hexyl acetate, butyl acetate, and ethyl hexanoate was quantified, and as the lactones, each of the contents of γ-decalactone, δ-decalactone, and γ-dodecalactone was quantified, in the same manner as in Test Example 1. The results are shown in Tables 4 and 5. In addition, the results comparing a total content of the esters and a total content of lactones are shown in FIGs. 1 and 2.

[Table 4]

**Table 4 (Green Ume 2012 Later Stage)**

| Number of Days Stored | Four Days | | | Five Days | | Six Days | | Before Storage |
|---|---|---|---|---|---|---|---|---|
| Oxygen Conc. (% by vol.) | 5 | 21 (in the air) | 80 | 21 (in the air) | 80 | 21 (in the air) | 80 | |
| Ester Content (Total of 4 Esters) | 2.3 | 12.2 | 19.1 | 15.5 | 20.3 | 17.3 | 16.6 | 0.0 |
| Ethyl Butyrate | 0,0 | 0.05 | 0.18 | 0.17 | 0.39 | 0.26 | 0.35 | 0.0 |
| Hexyl Acetate | 1.4 | 2.5 | 3.5 | 2.5 | 3.1 | 3.0 | 3.4 | 0.0 |
| Butyl Acetate | 0.9 | 9.5 | 15.2 | 12.7 | 16.5 | 13.8 | 12.5 | 0.0 |
| Ethyl Hexanoate | 0.0 | 0.13 | 0.25 | 0.16 | 0.22 | 0.21 | 0.26 | 0.0 |

| | | | | | | | | |
|---|---|---|---|---|---|---|---|---|
| * Units are expressed by mg/kg fruit. | | | | | | | | |

[Table 5]

**Table 5 (Green Ume 2012 Final Stage)**

| Number of Days Stored | Three Days | | | Five Days | Six Days | Before Storage |
|---|---|---|---|---|---|---|
| Oxygen Conc. (% by vol.) | 5 | 21 (in the air) | 80 | 21 (in the air) | 21 (in the air) | |
| Lactone Content (Total of 3 Lactones) | 1.6 | 2.4 | 3.6 | 2.3 | 3.1 | 0.014 |
| γ-Decalactone | 1.22 | 1.68 | 2.44 | 1.70 | 2.26 | 0.007 |
| δ-Decalactone | 0.21 | 0.27 | 0.37 | 0.13 | 0.16 | 0.00 |
| γ-Dodecalactone | 0.18 | 0.42 | 0.78 | 0.50 | 0.65 | 0.007 |

| | | | | | | |
|---|---|---|---|---|---|---|
| * Units are expressed by mg/kg fruit. | | | | | | |

Although the numerical values would differ depending upon the maturity and the harvested years of the fruits stored, as shown in Tables 4 and 5, when fruits were harvested at the same timing in the same plantation, and the fruits having a certain level of fruit hardness were matured after harvest, the contents of the esters and lactones having fruity aroma could be increased in an even shorter storage period by increasing an oxygen concentration during storage. The matters that the numerical values of the aroma ingredient of fruits would differ depending upon the maturity, the harvested years and plantations to be harvested of the fruits are described in a publication (Umeken, Hort. Res. (Japan), 11(4) 515, 2012) or the like.

### Test Example 3

For 2 kg of the green *ume* used in Test Example 1, the contents of esters and lactones were quantified when the green *ume* was matured after harvest at a temperature as listed in Table 6 or 7 in a desiccator with an oxygen concentration of 80% by volume that was regulated in the same manner as in Test Example 1. As the esters, a total of the contents of ethyl butyrate, hexyl acetate, butyl acetate, and ethyl hexanoate was quantified, and as the lactones, a total of γ-decalactone, δ-decalactone, and γ-dodecalactone was quantified, in the same manner as in Test Example 1. The results are shown in Tables 6 and 7.

In addition, a sensory test for aroma was conducted. Specifically, a desiccator in which the fruits matured after harvest were stored was opened, and the aroma coming out of the fruits was evaluated for strength of aroma by two or three evaluation panelists who were trained for the evaluation of fruit liqueurs (*ume* liqueurs, liqueurs) in accordance with the following criteria, and a mean was calculated.

### [Evaluation Criteria of Strength of Aroma]

5: Considerably strong
4: Strong
3: Strongly felt
2: Felt
1: None

[Table 6]

**Table 6 (Green Ume 2012 Later Stage, Stored for Four Days)**

| | Oxygen Concentration (80% by volume) | | | Before Storage |
|---|---|---|---|---|
| Storage Temperature | 15°C | 20°C | 25°C | |
| Ester Content (Total of 4 Esters) | 0.08 | 19.1 | 16.2 | 0.0 |
| Sensory Test for Aroma (Strength of Fruity Aroma) | 1 | 4 | 4 | 1 |

| | | | | |
|---|---|---|---|---|
| *Units of Ingredient Content are expressed by mg/kg fruit. | | | | |

[Table 7]

**Table 7 (Green Ume 2012 Final Stage)**

| | Oxygen Concentration (80% by volume) | | | | | Before Storage |
|---|---|---|---|---|---|---|
| Number of Days Stored | Three Days | | | Five Days | | |
| Storage Temperature | 15°C | 20°C | 25°C | 15°C | 20°C | |
| Ester Content (Total of 4 Esters) | - | 22.2 | 25.2 | - | 25.9 | 0.0 |
| Lactone Content (Total of 3 Lactones) | - | 3.6 | 2.5 | - | 2.5 | 0.014 |
| Sensory Test for Aroma (Strength of Fruity Aroma) | 1 | 5 | 5 | 2 | 5 | 1 |

| | | | | | | |
|---|---|---|---|---|---|---|
| * Units of Ingredient Content are expressed by mg/kg fruit. | | | | | | |

It was confirmed that the storage temperature influences the increase in the aroma ingredient, in the same manner as in Non-Patent Publication 1. When stored at an oxygen concentration of 80%, the increases in the ester content and the lactone content were similarly found under the conditions of a temperature of 20° to 25°C.

### Test Example 4 (Sensory Evaluation of Aroma)

For 2 kg of green *ume* (2011 earlier stage) of "Nanko" harvested at Tanabe-shi, Wakayama was matured after harvest at 20°C at an oxygen concentration (% by volume) as listed in Table 8 that was regulated in the same manner as in Test Example 1, and a sensory test for aroma was conducted in the same manner as in Test Example 3. The results are shown in Table 8. Here, as to commercially available *Kanjuku Ume* (fully matured *ume*), the sensory test was also conducted in the same manner.

[Table 8]

**Table 8 (Green Ume 2011 Earlier Stage, Stored for Five Days)**

| Oxygen Concentration | 5% | 21% (in the air) | 40% | 60% | 80% | Before Storage | Commercially Available "Kanjuku *Ume*" |
|---|---|---|---|---|---|---|---|
| Sensory Test for Aroma (Strength of Fruity Aroma) | 1 | 2 | 3 | 4 | 4 | 1 | 2 |

A higher oxygen concentration during the maturation after harvest resulted in increased fruity aroma of the fruits.

### Test Example 5 (Sensory Evaluation of Aroma)

For various kinds of commercially available green ume (purchased June 2012), the maturation after harvest was carried out at 20°C with an oxygen concentration listed in Table 9 that was regulated in the same manner as in Test Example 1, and a sensory test concerning aroma was conducted in the same manner as in Test Example 3. The results are shown in Table 9.

[Table 9]

**Table 9 (2012 Commercially Available Green Ume)**

| Variety | Date of Purchase | Oxygen Concentration | | | Before Storage |
|---|---|---|---|---|---|
| | | 5% | 21% (in the air) | 80% | |
| Kensaki | 2012.6.12 | 1 | 2 | 3 | 1 |
| Shirakaga | 2012.6.19 | 1 | 2 | 3 | 1 |
| Benisashi | 2012.6.20 | 1 | 2 | 3 | 1 |
| Nanko | 2012.6.15 | 1 | 2 | 4 | 1 |

Higher oxygen concentrations during maturation after harvest resulted in increased fruity aromas in any of the varieties.

### Test Example 6 (Sensory Evaluation of Ume Liqueur)

### < Production of Ume Liqueur >

Using the fruit of green *ume* 'Nanko' (2011 green *ume* later stage) which was stored for three days or five days at an oxygen concentration of 21%, 60%, or 80%, *ume* liqueurs were immersed and produced in the following manner. Specifically, *ume* 1.0 (kg)/rock candies 0.6(kg)/white liquor 1.8 (L) were placed in a *ume* liqueur bottle, and immersed at room temperature for seven months. During the course of immersion, sampling was taken at third month and fifth month, and the strength of aroma was evaluated by 9 evaluation panelists who were trained for the evaluation of the fruit liqueurs (*ume* liqueurs, liqueurs).

As a result, at a point of sampling at three months, the immersion liqueur of *ume* matured after harvest that was stored for 3 days had an increased fruity aroma as the oxygen concentration during storage was increased. In addition, the immersion liqueur of the *ume* matured after harvest that was stored for five days had an increased fruity aroma as the oxygen concentration during storage was increased, and had a stronger fruity aroma than the immersion liqueur of the *ume* matured after harvest that was stored for three days.

At a point of sampling at five months, maturity feel was increased as the *ume* liqueur in all the immersion liqueurs than that at the point of sampling at three months, and the immersion liqueurs of *ume* matured after harvest that were stored for three days had an increased fruity aroma as the oxygen concentrations during storage were increased. In addition, the immersion liqueurs of *ume* matured after harvest that were stored for five days had an increased fruity aroma as the oxygen concentrations during storage were increased, and further had an increased fruity aroma than the immersion liqueurs of the *ume* matured after harvest that were stored for three days.

### Test Example 7

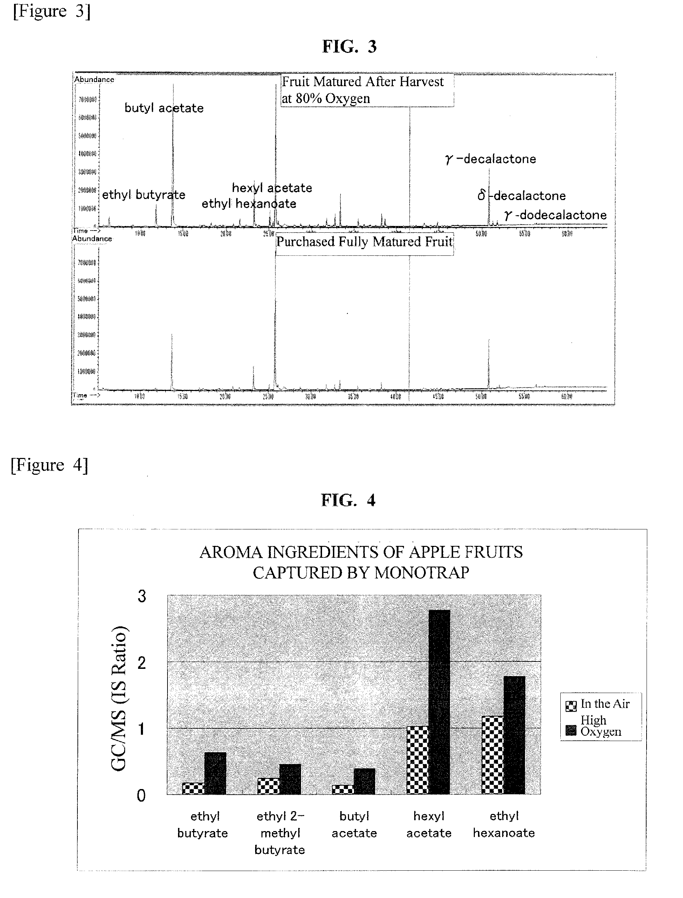

For 2 kg of the green *ume* used in Test Example 1, the amounts of esters and lactones collected by steam distillation were measured when the green *ume* was matured after harvest at 20°C for four days in a desiccator with an oxygen concentration of 80% by volume that was regulated in the same manner as in Test Example 1. The steam distillation was carried out by blowing steam into a vessel containing fruits at an ambient pressure. As the esters, each of ethyl butyrate, hexyl acetate, butyl acetate, and ethyl hexanoate was measured, and as the lactones, each of γ-decalactone. δ-decalactone, and γ-dodecalactone was measured for the collected distillate according to the gas chromatography under the following conditions. Example of measurement chart is shown in FIG. 3. Here, the same measurements were conducted on commercially available *Kanjuku Ume.*

### < Gas Chromatograph Analysis >

Apparatus: GC/MS 7890A/5975C, manufactured by Agilent
Column: DB-WAXER (manufactured by J&W),
60 m × 0.32 mm × 0.25 µm
Heating Conditions: Keeping at 40°C for 10 minutes, thereafter heating to 220°C at a rate of 4°C /min, and keeping thereat for 10 minutes
Ionization Method: EI (Electronic Ionization) method, ionization voltage 70 eV

### < Dynamic Head Space Conditions >

Apparatus: MPS, manufactured by GERSTEL GmbH & Co. KG
Adsorbent: TENAX
Amount of Sample : 80 µl
Sample Gasification Temperature: 80°C
Kinds of Gas for Sample Gasification: nitrogen

From FIG. 3, the steam distillation collection liquid of the ume matured after harvest obtained by the method of the present invention contains larger amounts of esters and lactones than those of the steam distillation collection liquid using purchased fully matured fruits, and it is suggested that the steam distillation collection liquid is rich in fruity aroma.

### Test Example 8

For commercially available apples "FUJI" produced in Aomori Prefecture, the contents of esters when the apples were matured after harvest at 20°C for three days in a desiccator with an oxygen concentration of 80% by volume that was regulated in the same manner as in Test Example 1 were subjected to the following treatment before analysis, and thereafter measured under the conditions for gas chromatograph in the same manner as in Test Example 1. Here, as the esters, each of the contents of ethyl butyrate, hexyl acetate, butyl acetate, ethyl hexanoate, and ethyl 2-methylbutyrate was measured. The results are shown in FIG. 4. In addition, as to the aroma of the fruits, the evaluation was carried out in the same manner as in Test Example 3. The results are shown in Table 10. Here, the samples stored in the air were also evaluated in the same manner.

### < Treatment Before Analysis >

Roughly cut pieces of fruits matured after harvest were placed in a glass bottle with a closable opening, and GL Sciences Mono trap was also included therein, to allow the aroma to be absorbed thereto at room temperature for 8 hours. The aroma ingredients were extracted with an organic solvent from Mono trap, IS was added to the extract, and the mixture was then concentrated in a hot water bath at 60°C, to prepare samples for gas chromatograph analysis.

[Table 10]

**Table 10 (Commercially Available Apples)**

| Oxygen Concentration | 21% (in the air) | 80% |
|---|---|---|
| Sensory Test for Aroma (Strength of Fruity Aroma) | 4 | 5 |

From FIG. 4, even in apple fruits, the contents of the esters having fruity aroma could be increased by increasing the oxygen concentration during storage. In addition, even in the sensory test, the fruits matured after harvest at an oxygen concentration of 80% had a strongly felt fruity aroma that was sweet and surely matured, than those matured after harvest in the air (Table 10).

### Test Example 9

For commercially available strawberries "SAGAHONOKA" produced in Saga Prefecture, the contents of esters and lactones were quantified when the strawberries were matured after harvest at 20°C for the number of days as listed in Table 11 or 12 in a desiccator with an oxygen concentration of 80% by volume that was regulated in the same manner as in Test Example 1. As the esters, each of the contents of ethyl butyrate, hexyl acetate, butyl acetate, ethyl hexanoate, ethyl 2-methylbutyrate, and ethyl 3-methylbutyrate was quantified, and as the lactones, each of the contents of γ-hexalactone, γ-decalactone, and γ-dodecalactone was quantified in the same manner as in Test Example 1. The results are shown in Tables 11 and 12. In addition, the content of DMHF(2,5-dimethyl-4-hydroxy-2H-furan-3-one) as the ingredient distinctly owned by strawberries was also measured in the same manner as in Test Example 1, and the results are shown in Table 13. The aroma of the fruits was evaluated in the same manner as in Test Example 3. The results are shown in Table 14. Here, the samples stored in the air were also evaluated.

[Table 11]

**Table 11**

| Number of Days Stored | 1 Day | | 2 Days | | 3 Days | |
|---|---|---|---|---|---|---|
| Oxygen Concentration (% by volume) | 21 (in the air) | 80 | 21 (in the air) | 80 | 21 (in the air) | 80 |
| Ester Content (Total of 6 Esters) | 0.87 | 7.96 | 1.21 | 9.58 | 4.36 | 6.70 |
| Ethyl Butyrate | 0.00 | 2.83 | 0.18 | 3.13 | 2.48 | 2.86 |
| Hexyl Acetate | 0.00 | 0.27 | 0.00 | 0.70 | 0.71 | 0.90 |
| Butyl Acetate | 0.00 | 0.06 | 0.04 | 0.10 | 0.21 | 0.09 |
| Ethyl Hexanoate | 0.24 | 3.59 | 0.31 | 4.43 | 0.11 | 1.41 |
| Ethyl 2-Methylbutyrate | 0.29 | 0.59 | 0.29 | 0.49 | 0.36 | 0.50 |
| Ethyl 3-Methylbutyrate | 0.35 | 0.61 | 0.39 | 0.73 | 0.49 | 0.94 |

| | | | | | | |
|---|---|---|---|---|---|---|
| * Units are expressed by mg/kg fruit. | | | | | | |

[Table 12]

**Table 12**

| Number of Days Stored | 1 Day | | 2 Days | | 3 Days | |
|---|---|---|---|---|---|---|
| Oxygen Concentration (% by volume) | 21 (in the air) | 80 | 21 (in the air) | 80 | 21 (in the air) | 80 |
| Lactone Content (Total of 3 Lactones) | 0.42 | 0.61 | 0.58 | 0.84 | 0.63 | 0.98 |
| γ-Hexalactone | 0.00 | 0.08 | 0.06 | 0.10 | 0.08 | 0.16 |
| γ-Decalactone | 0.00 | 0.03 | 0.02 | 0.03 | 0.02 | 0.02 |
| γ-Dodecalactone | 0.42 | 0.51 | 0.51 | 0.71 | 0.53 | 0.80 |

| | | | | | | |
|---|---|---|---|---|---|---|
| * Units are expressed by mg/kg fruit. | | | | | | |

[Table 13]

**Table 13**

| Number of Days Stored | 1 Day | | 2 Days | | 3 Days | |
|---|---|---|---|---|---|---|
| Oxygen Concentration (% by volume) | 21 (in the air) | 80 | 21 (in the air) | 80 | 21 (in the air) | 80 |
| DMHF(furaneol) | 10.3 | 24.3 | 30.0 | 38.8 | 26.7 | 33.0 |

| | | | | | | |
|---|---|---|---|---|---|---|
| * Units are expressed by mg/kg fruit. | | | | | | |

[Table 14]

**Table 14**

| Number of Days Stored | 1 Day | | 2 Days | | 3 Days | |
|---|---|---|---|---|---|---|
| Oxygen Concentration (% by volume) | 21 (in the air) | 80 | 21 (in the air) | 80 | 21 (in the air) | 80 |
| Ester Content (Total of 6 Esters) | 0.87 | 7.96 | 1.21 | 9.58 | 4.36 | 6.70 |
| Lactone Content (Total of 3 Lactones) | 0.42 | 0.61 | 0.58 | 0.84 | 0.63 | 0.98 |
| DMHF(furaneol) | 10.3 | 24.3 | 30.0 | 38.8 | 26.7 | 33.0 |
| Sensory Test for Aroma (Strength of Fruity Aroma) | 2 | 4 | 2 | 5 | 4 | 4 |

| | | | | | | |
|---|---|---|---|---|---|---|
| * Units of contents of ingredients are expressed by mg/kg fruit. | | | | | | |

When strawberry fruits having weak aroma were matured after harvest, increased oxygen concentrations during storage of the strawberry fruits resulted in quickly and largely increased contents of the esters, the lactones, and the DMHF, ingredients attributable to the sweet and fruity aroma of strawberries, than those strawberry fruits that are matured after harvest in the air.

From the above, it is possible to suitably use the strawberry fruits with increased sweet and fruity aroma that are stored at higher oxygen concentrations in fruit liqueurs, fresh fruit juices, or fruit jam, making good use of the increased aromas. In addition, it is suggested that the fruits with increased aromas are possibly suitably used by freezing the fruits and mixed into ice creams and the like.

### Test Example 10

As for commercially available Japanese plum (*Prunus salicina*) fruits or apricot (*Prunus armeniaca*) fruits, the contents of esters and lactones are quantified when the fruits are matured after harvest in a desiccator with an oxygen concentration which is regulated in the same manner as in Test Example 1. The Japanese plum fruits or the apricot fruits are considered to have the same aroma producing mechanisms inside the fruits, as in other rosaceous fruits; therefore, when these fruits are matured after harvest, it is considered that the fruits that are matured after harvest with increased oxygen concentrations during storage have more increased contents of esters and lactones that are attributable to sweet and fruity aromas of the Japanese plum fruits or the apricot fruits, than the fruits that are matured after harvest in the air.

Formulation Examples are given hereinbelow.

### Production Example 1: Fruit Liqueur (Liqueur)

One kilogram of the Japanese plum (*Prunus salicina*) fruits or apricot (*Prunus armeniaca*) fruits that are matured after harvest according to the method of the present invention and 200 g of rock candies are alternately placed in a clean glass bottle, 1.8 L of a white liquor (35 alcoholicity) is poured thereinto, and the bottle is tightly sealed, and stored in a cool and dark place for three months while occasionally shaking the bottle, to produce a fruit liqueur with a rich aroma of Japanese plum or apricot.

### Production Example 2: Fruit Juice

The Japanese plum (*Prunus salicina*) fruits or apricot (*Prunus armeniaca*) fruits are matured after harvest in accordance with the method of the present invention, and thereafter the frozen fruits and the rock candies of equal weight as the fruits were alternately placed in a clean glass bottle, and a small amount of *shochu* is sprinkled thereto and mixed. The bottle is tightly sealed, and stored in a cool dark place while occasionally shaking the bottle to ooze out fruit juice from the fruits, to produce a juice rich in aroma of the Japanese plum or apricot.

### Production Example 3: Fruit Jam

A small amount of water is added to 1 kg of Japanese plum (*Prunus salicina*) fruits that are matured after harvest according to the method of the present invention, and boiled until the fruit flesh is softened, and the softened fruit flesh is strained with a strainer to remove seeds and skin, to give a fruit juice. The fruit juice is boiled down while adding 800 g of sugar and, to produce a Japanese plum jam rich in aroma. In the case of the apricot (*Prunus armeniaca*) fruits, an apricot jam is also produced in the same manner.

### Production Example 4: Fruit Extract

The Japanese plum (*Prunus salicina*) fruits or apricot (*Prunus armeniaca*) fruits that are matured after harvest according to the method of the present invention are placed in a container, and subjected to steam distillation, and a liquid is collected, to produce an aroma extract of Japanese plum or apricot.

### Production Example 5: Fruit Liqueur (Spirits)

The immersion liqueur shown in Production Example 1 is subjected to distillation under a prescribed method, to produce a fruit liqueur (spirits) rich in aroma of Japanese plum (*Prunus salicina*) or apricot (*Prunus armeniaca*).

### INDUSTRIAL APPLICABILITY

According to the present invention, it is possible to obtain a fruit that is matured after harvest which is more excellent in aroma. In addition, a fruity fruit liqueur can be provided by using the fruits that are matured after harvest.

## Claims

1. A method for maturing a rosaceous fruit after harvest, comprising maturing a rosaceous fruit in an oxygen-loaded atmosphere.

2. The method according to claim 1, wherein the environment is an oxygen concentration of from 40 to 80% by volume.

3. The method according to claim 1 or 2, wherein the rosaceous fruit is selected from the group consisting of Japanese apricot *(Prunus mume*) fruit, apple fruit, Japanese plum (*Prunus salicina*) fruit, apricot (*Prunus armeniaca*) fruit, and strawberry fruit.

4. A method for storing a rosaceous fruit, comprising storing a rosaceous fruit in an oxygen-loaded atmosphere.

5. The method according to claim 4, wherein the environment is an oxygen concentration of from 40 to 80% by volume.

6. The method according to claim 4 or 5, wherein the rosaceous fruit is selected from the group consisting of Japanese apricot (*Prunus mume*) fruit, apple fruit, Japanese plum (*Prunus salicina*) fruit, apricot (*Prunus armeniaca*) fruit, and strawberry fruit.

7. A method for increasing ester production of a rosaceous fruit, comprising storing a rosaceous fruit in an oxygen-loaded atmosphere to produce an ester.

8. The method according to claim 7, wherein the environment is an oxygen concentration of from 40 to 80% by volume.

9. The method according to claim 7 or 8, wherein the rosaceous fruit is selected from the group consisting of Japanese apricot (*Prunus mume)* fruit, apple fruit, Japanese plum (*Prunus salicina*) fruit, apricot *(Prunus armeniaca*) fruit, and strawberry fruit.

10. A method for increasing lactone production of a rosaceous fruit, comprising storing a rosaceous fruit in an oxygen-loaded atmosphere to produce a lactone.

11. The method according to claim 10, wherein the environment is an oxygen concentration of from 40 to 80% by volume.

12. The method according to claim 10 or 11, wherein the rosaceous fruit is selected from the group consisting of Japanese apricot *(Prunus mume)* fruit, apple fruit, Japanese plum (*Prunus salicina*) fruit, apricot (*Prunus armeniaca*) fruit, and strawberry fruit.

13. A method for producing a fruit matured after harvest, comprising storing a rosaceous fruit in an oxygen-loaded atmosphere to give a fruit matured after harvest.

14. The method according to claim 13, wherein the environment is an oxygen concentration of from 40 to 80% by volume.

15. The method according to claim 13 or 14, wherein the rosaceous fruit is selected from the group consisting of Japanese apricot *(Prunus mume)* fruit, apple fruit, Japanese plum (*Prunus salicina*) fruit, apricot *(Prunus armeniaca*) fruit, and strawberry fruit.

16. A fruit matured after harvest of a rosaceous fruit obtained by a method as defined in any one of claims 13 to 15.

17. A processed product of a rosaceous fruit, obtained by using a fruit matured after harvest as defined in claim 16 as a raw material.

18. The processed product according to claim 17, wherein the processed product is a *ume* liqueur (Japanese apricot *(Prunus mume)* liqueur).

19. A method for producing a fruit liqueur, using a rosaceous fruit matured in an oxygen-loaded atmosphere as a raw material.

20. The method according to claim 19, wherein the environment is an oxygen concentration of from 40 to 80% by volume.

21. The method according to claim 19 or 20, wherein the rosaceous fruit is selected from the group consisting of Japanese apricot (*Prunus mume*) fruit, apple fruit, Japanese plum (*Prunus salicina*) fruit, apricot (*Prunus armeniaca*) fruit, and strawberry fruit.

22. A fruit liqueur of a rosaceous fruit obtained by a method as defined in any one of claims 19 to 21.

23. The fruit liqueur according to claim 22, wherein the fruit liqueur is a *ume* liqueur.
